Europäisches Patentamt

(19) European Patent Office

Office européen des brevets

(11) Publication number: **0 194 317**

**B1**

(12) **EUROPEAN PATENT SPECIFICATION**

(45) Date of publication of patent specification: **24.01.90**

(21) Application number: **85904288.9**

(22) Date of filing: **30.08.85**

(86) International application number:
**PCT/JP85/00481**

(87) International publication number:
**WO 86/01544 13.03.86 Gazette 86/06**

(51) Int. Cl.⁵: **C 25 F 3/04, H 01 G 9/04**

(54) **Method of producing electrolytic capacitors.**

(30) Priority: **30.08.84 JP 181312/84**

(43) Date of publication of application:
**17.09.86 Bulletin 86/38**

(45) Publication of the grant of the patent:
**24.01.90 Bulletin 90/04**

(84) Designated Contracting States:
**DE FR GB**

(56) References cited:
**EP-A-0 093 960**
**GB-A-2 118 575**
**JP-A-51 142 442**
**JP-A-55 158 298**
**JP-A-58 207 400**
**JP-B-58 005 796**

(73) Proprietor: **Matsushita Electric Industrial Co.,
Ltd.
1006, Oaza Kadoma
Kadoma-shi Osaka-fu, 571 (JP)**

(72) Inventor: **KOJIMA, Kouichi
18-15, Kuzuhamisaki 1-chome
Hirakata-shi Osaka-fu 573 (JP)**
Inventor: **OKABAYASHI, Masanori
81-6, Gokashouichibanwari
Uji-shi Kyoto-fu 611 (JP)**
Inventor: **KANZAKI, Nobuyoshi
33-98, Teradaichinokubo
Joyo-shi Kyoto-fu 610-01 (JP)**
Inventor: **TOUYAMA, Kenji
22-19, Gokashoukitanoshou
Uji-shi Kyoto-fu 611 (JP)**
Inventor: **SHIMATANI, Ryouichi
4-2-7, Osumigaoka Tanabe-cho
Tsuzuki-gun Kyoto-fu 610-03 (JP)**

(74) Representative: **Dr. Elisabeth Jung Dr. Jürgen
Schirdewahn Dipl.-Ing. Claus Gernhardt
P.O. Box 40 14 68 Clemensstrasse 30
D-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### TECHNICAL FIELD

The present invention relates to a method of producing electrolytic capacitors comprising an aluminium electrode foil, an insulating paper and an electrolyte.

### BACKGROUND ART

The so-called electrolytic capacitor is constituted by rolling an aluminium electrode foil and an insulating paper and impregnating the roll with an electrolyte for its driving. In this capacitor the aluminium electrode foil used has undergone an etching treatment in order to increase the surface enlarging factor (surface area after etching/surface area before etching). Heretofore, for etching an aluminium electrode foil mainly the following methods have been normally employed.

In the first method an etching solution comprising hydrochloric acid as its main component is used. The etching is performed with placing an aluminium foil between two electrode plates facing each other and being parallel thereto, allowing an alternating current to flow through the etching solution between the two electrode plates, without that the current flows directly through the aluminium foil (see p.e. "J. Electrochem. Soc.: Electrochemical Science and Technology", April 1983, pp. 770 ff.).

The second method involves using an etching solution of sodium chloride as its main component. The etching is performed by immersing an aluminium foil in this etching solution and by letting a direct current or an alternating current or an alternating current-superimposed direct current flow in the etching solution between the aluminium foil and an electrode or electrodes placed on one or both sides of the aluminium foil (see loc. cit., February 1981, p.300).

However, the first etching method is disadvantageous in that only a current that has a symmetrical wave form in its positive and negative cycle permits independent changes in the width of its positive and negative wave part and in its positive and negative current densities. The surface enlarging factor is thus not adequately enhanced. Such an enhancement is of great importance for the miniaturization of electrolytic capacitors having an aluminium electrode foil. The second etching method also has a grave defect in that because of the use of a nearly neutral aqueous solution of sodium chloride for the etching treatment the aluminium ion, which dissolves during the electrolytic etching is deposited on the production equipment or the like in the form of the hydroxide (white powder). This forming of a deposit interferes with a smooth proceeding of the production of an etched foil and with the upgrading of the operation efficiency.

### DISCLOSURE OF THE INVENTION

The present invention is intended to eliminate such prior art difficulties and aims at enhancing the operation efficiency of the production equipment as well as producing aluminium foils having a high surface enlarging factor in a hydrochloric acid etching solution which does not form a white powder.

Thus, according to the present invention a method of producing electrolytic capacitors, comprising an aluminium electrode foil, an insulating paper and an electrolyte, by etching an electrode foil of aluminium is envisaged, wherein a periodic non-interrupted alternating current flow in an etching solution comprising an hydrochloric acid solution is used, the ratio of the electric charge $Q_N$ of the negative cycle to the electric charge $Q_P$ of the positive cycle, which are applied by said alternating current on said aluminium foil, is set at a value in the range from 0.2 to 2.0, and the duty ratio

$$\frac{T_P}{T_P + T_N}$$

in which expression $T_P$ is defined as the width of the positive wave form and $T_N$ is defined as the width of the negative wave form (anode time and cathode time of the applied alternating current), is set at value in the range from 51 to 90%.

In this way an aluminium foil which shows a higher surface factor can be obtained.

EP—A—93 960 teaches etching of aluminium foils for printing purposes with alternate current having rather low frequencies within the range from 0.3 to 15 Hz.

DE—A—3 020 420 uses an etching current which must be interrupted for a certain time period and be left on the zero potential (see time period X in figures 1b, 2b and 3b), for which purpose a special swtiching device is used (see fig. 4 and 5). It is explained on page 3, par. 1, of the citation that by this measure a superimposed double-structure of pits or grains is achieved which is most suitable for printing purpses.

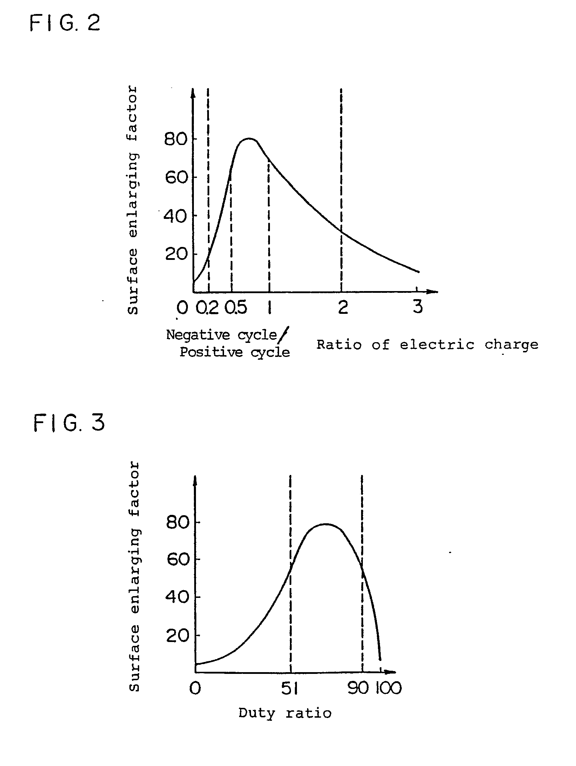

GB—A—2 118 575 is concerned with the creation of a so-called secondary surface structure on a primary structure, the latter having been achieved by mechanical graining and chemical etching (see fig. 3a and 3b and the explanations given on page 2, lines 18 to 29).

From fig. 4a to 4c of this prior art it can be seen that the ratio of

$$\frac{t_A}{t_A + t_C}$$

(which corresponds to the duty ratio

$$\frac{T_p}{T_p + T_N}$$

of the present invention) is 50% or lower and this fact is explicitly stated on page 5, last lines, of the respective application print to be a preferred feature therein.

BRIEF DESCRIPTION OF THE DRAWINGS

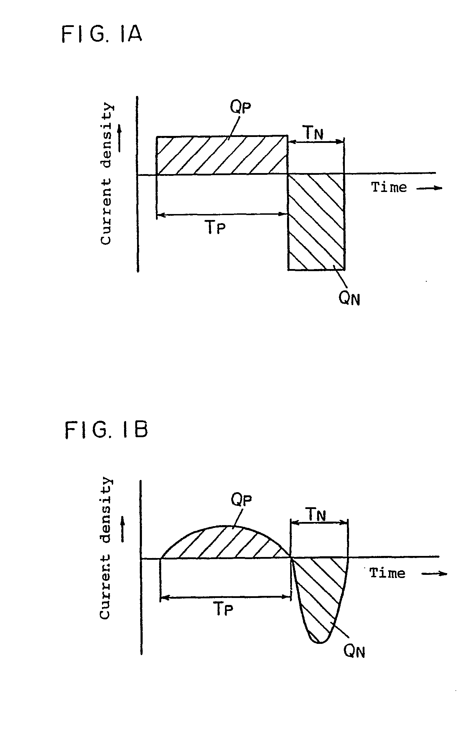

FIGS. 1A and B are wave form graphs showing the wave forms of the alternating non-interrupted current which is impressed on an aluminium foil in the method for etching the electrode foil for electrolytic capacitors according to the present invention.

FIG. 2 is a chracteristic graph showing the relationship between the ratio $Q_N : Q_p$ of the negative to the positive cycle part of the electric charge which is impressed on the aluminium foil and the surface enlarging factor according to the method of the present invention.

FIG. 3 is a characteristic graph showing the relationship between the duty ratio as heretofore defined and the surface enlarging factor according to the method of the present invention.

BEST MODE FOR EMBODYING THE INVENTION

In the etching method used according to the present invention, the ratio $Q_N : Q_p$ and the duty ratio must both be set at a value which falls within the ranges mentioned above.

Thus, FIGS. 1A and B show embodiments in which the etching current wave forms are rectangular (FIG. 1A) and a sine wave respectively.

In the following, an embodiment of the present invention is described. As a test sample a 90 µm thick annealed aluminium foil of 99.99% purity was used. First, using as counter-electrode a carbon plate in a 10% hydrochloric acid solution, the aluminium foil was etched at a temperature of 40°C by letting a rectangular wave current directly flow therethrough, setting the positive and the negative pulse widths and the positive and the negative current densities such that a positive current charge of 70 C/cm$^2$ is applied. As a result it was found that the surface enlarging factor depends on the ratio of the electric charge $Q_N$ of the negative cycle to the electric charge $Q_p$ of the positive cycle as shown in FIG. 2 and that the surface enlarging factor is high in a range of this ratio between 0.2 and 2.0. This ratio $Q_N : Q_p$ is optimal in a preferred range between 0.5 and 1.0. The mechanism is supposed to be as follows: The etching by an alternating current in a hydrochloric acid solution proceeds by a repeated dissolution of aluminium at the time of the positive cycle and film formation due to the pH rise under hydrogen reduction at the time of the negative cycle. But if the electric charge ratio has a value below 0.2, then the hydrogen reduction will not adequately proceed on the interface electrolyte/aluminium foil at the time of negative cycle, and the film is barely formed, resulting in general corrosion, so that the surface enlarging factor is lower. If on the other hand the aforementioned electric charge ratio is higher than 2.0, then the amount of the film formed at the time of the negative cycle is too large, causing local corrosion; consequently, the etching proceeds not uniformly, resulting in a low surface enlarging factor.

In another experiment the etching was similarly performed at a positive current density of 0.4 A/cm$^2$ and with the variation of the duty ratio while the electric charge ratio $Q_ : Q_p$ was maintained at 0.8. As a result, as shown in FIG. 3, the surface enlarging factor is high in a range wherein the duty ratio has a value of from 51% to 90%. The mechanism is supposed to be as follows: If the duty ratio is below 50%, chemical dissolution in the hydrochloric acid solution takes place, thus the etching pit formed is dissolved at its surface, resulting in a low surface enlarging factor. On the other hand, if the duty ratio is higher than 90%, then the width of the negative pulse is too small, the pH rises locally in a short period of time, forming only a nonuniform film; consequently, local corrosion will take place, resulting in a low surface enlarging factor.

As above-described, a high surface enlarging factor may be achieved with values of the electric charge ratio $Q_N : Q_p$ in the range from 0.2 to 2.0. Particularly from 0.5 to 1.0, and with values of the duty ratio in the range of from 51—90% in a hydrochloric acid solution without formation of white powder.

This effect may be also achieved similarly with trapezoidal or sine wave alternating currents.

The surface enlarging factors obtained under the aforementioned etching conditions and under the conventional conditions of the prior art are compared at a positive current charge of 70 C/cm$^2$ as in the following table.

| Example | Etching solution | White powder | Etching current wave form | Surface enlarging factor |
|---|---|---|---|---|
| Prior art example 1 | Hydrochloric acid | Not produced | Sine wave | 65 |
| Prior art example 2 | Sodium chloride | Produced | Rectangular wave | 80 |
| Embodiment | Hydrochloric acid | Not produced | Rectangular wave | 80 |

As this table indicates, in the hydrochloric acid solution it has been possible to increase the surface enlarging factor by about 20% as compared with the conventional methods.

In the present invention a hydrochloric acid solution is used as the etching solution, which may have a 3—20% concentration. A hydrochloric acid solution containing aluminium chloride is, however, preferable and the etching equipment temperature should preferably be 20—80°C. Besides, preferred frequencies of the alternating current are selected in the range of 5—100 Hz.

**Claims**

1. Method of producing electrolytic capacitors comprising an aluminium electrode foil, an insulating paper and an electrolyte, by etching an electrode foil of aluminium, wherein a periodic non-interrupted alternating current flow in an etching solution comprising a hydrochloric acid solution is used, the ratio of the electric charge $Q_N$ of the negative cycle to the electric charge $Q_p$ of the positive cycle, which are applied by said alternating current on said aluminium foil, is set at a value in the range from 0.2 to 2.0, and the duty ratio

$$\frac{T_p}{T_p + T_N}$$

in which expression $T_p$ is defined as the width of the positive wave form and $T_N$ is defined as the width of the negative wave from (anode time and cathode time of the applied alternating current), is set at a value in the range from 51 to 90%.

2. Method of producing electrolytic capacitors in accordance with Claim 1 characterized in that said hydrochloric acid solution is a 3—20% concentration solution containing aluminium chloride and has a temperature between 20 and 80°C.

3. Method of producing electrolytic capacitors in accordance with Claim 1 characterized in that the frequency of said alternating current is in the range from 5 to 100Hz.

4. Method of producing electrolytic capacitors in accordance with Claim 1 characterized in that the said ratio $Q_N : Q_p$ of the electric charge of the negative cycle to the electric charge of the positive cycle of said alternating current is set at a value in a range from 0.5 to 1.0.

5. Method of producing electrolytic capacitors in accordance with Claim 1, characterized in that as etching solution a 3—20% concentration of hydrochloric acid solution containing aluminium chloride is used, in that said electrolytic etching is performed at a temperature of 20—80°C by letting an alternating current of a frequency of 5—100 Hz flow therethrough, that the ratio $Q_N : Q_p$ of the electric charge of the negative cycle to the electric charge of the positive cycle, which are applied by said alternating current on said aluminium foil, is set at a value in a range from 0.2 to 2.0, and that the duty ratio

$$\frac{T_p}{T_p + T_N}$$

is set at a value in a range from 51—90%.

6. Method of producing electrolytic capacitors in accordance with Claim 5 characterized in that said etching current wave form is of rectangular, trapezoidal or sine wave.

7. Method of producing electrolytic capacitors in accordance with Claim 1 characterized in that as etching solution a 3—20% concentration of hydrochloric acid solution containing aluminium chloride is used, in that said electrolytic etching is performed in this solution at a temperature of 20—80°C by letting an alternating current of a frequency of 5—100Hz flow therethrough, that the ratio $Q_N : Q_p$ of the electric charge of the negative cycle to the electric charge of the positive cycle, which are applied by said

4

alternating current on said aluminium foil is set at a value in a range from 0.5 to 1.0, and tha the duty ratio

$$\frac{T_p}{T_p + T_N}$$

is set at a value in the range from 51 to 90%.

**Patentansprüche**

1. Methode zur Herstellung elektroytischer Kondensatoren mit einer Elektrodenfolie aus Aluminium, einem Isolierpapier und einem Elektrolyt, durch Ätzen einer Elektrodenfolie aus Aluminium, in welchem ein periodischer ununterbrochener Wechselstrom in einer Ätzlösung, enthaltend eine Salzsäurelösung, verwendet wird, das Verhältnis von elektrischer Ladung $Q_N$ des negativen Cyclus zur elektrischen Ladung $Q_p$ des positiven Cyclus, welche durch den genannten Wechselstrom auf die genannte Aluminiumfolie aufgebracht werden, auf einen Wert im Bereich von 0,2:1 bis 2,0:1 eingestellt wird und das Leistungsverhältnis

$$\frac{T_p}{T_p + T_N}$$

in welchem Ausdruck $T_p$ die Breite der positiven Wellenform und $T_N$ die Breite der negativen Wellenform wiedergibt (Anodenzeit und Kathodenzeit des angelegten Wechselstroms), auf einen Wert im Bereich von 51 bis 90% eingeregelt wird.

2. Methode zur Herstellung elektrolytischer Kondensatoren nach Anspruch 1, dadurch gekennzeichnet, daß die genannte Salzsäurelösung eine 3-bis 20-prozentige Aluminiumchlorid enthältende Lösung ist und eine Temperatur zwischen 20 und 80°C aufweist.

3. Methode zur Herstellung elektrolytischer Kondensatoren nach Anspruch 1, dadurch gekennzeichnet, daß die Frequenz des genannten Wechselstroms im Bereich von 5 bis 100 Hertz liegt.

4. Methode zur Herstellung elektrolytischer Kondensatoren nach Anspruch 1, dadurch gekennzeichnet, daß das genannte Verhältnis $Q_N : Q_p$ der elektrischen Ladung des negativen Cyclus zur elektrischen Ladung des positiven Cyclus auf einen Wert im Bereich von 0,5:1 bis 1,0:1 eingeregelt wird.

5. Methode zur Herstellung elektrolytischer Kondensatoren nach Anspruch 1, dadurch gekennzeichnet, daß als Ätzlösung eine 3- bis 20-prozentige Lösung einer Aluminiumchlorid enthaltenden Salzsäurelösung verwendet wird, daß das genannte elektrolytische Ätzen bei einer Temperatur von 20 bis 80°C durch Hindurchleiten eines Wechselstroms mit einer Frequenz von 5 bis 100 Hertz durchgeführt wird, daß das Verhältnis $Q_N : Q_p$ der elektrischen Ladung des negativen Cyclus zur elektrischen Ladung des positiven Cyclus, welche durch den genannten Wechselstrom auf die Aluminiumfolie aufgebracht werden, auf einen Wert im Bereich von 0,2:1 bis 2,0:1 eingestellt wird, und daß das Leistungsverhältnis

$$\frac{T_p}{T_p + T_N}$$

auf einen Wert im Bereich von 51 bis 90% eingeregelt wird.

6. Methode zur Herstellung elektrolytischer Kondensatoren nach Anspruch 5, dadurch gekennzeichnet, daß die Wellenform des Ätzstromes rechteckig, trapezförmig oder sinusförmig ist.

7. Methode zur Herstellung elektrolytischer Kondensatoren nach Anspruch 1, dadurch gekennzeichnet, daß als Ätzlösung eine 3- bis 20-prozentige Konzentration einer Salzsäurelösung enthaltend Aluminiumchlorid verwendet wird, daß das genannte elektrolytische Ätzen in dieser Lösung bei einer Temperatur von 20 bis 80°C durch Hindurchleiten von Wechselstrom mit einer Frequenz von 5 bis 100 Hertz durchgeführt wird, daß das Verhältnis $Q : Q_p$ der elektrischen Ladung des negativen Cyclus zur elektrischen Ladung des positiven Cyclus, welche durch den genannten Wechselstrom auf die genannte Aluminiumfolie aufgebracht werden, auf einen Wert im Bereich von 0,5:1 bis 1,0:1 eingestellt wird, und daß das Leistungsverhältnis

$$\frac{T_p}{T_p + T_N}$$

auf einen Wert im Bereich von 51 bis 90% eingeregelt wird.

## Revendications

1. Procédé pour la fabrication de condensateurs électrolytiques comprenant un clinquant d'aluminium formant électrode, un papier isolant et un électrolyte, par attaque du clinquant d'aluminium formant électrode, où l'on utilise la circulation d'un courant alternatif périodique non interrompu dans une solution d'attaque comprenant une solution d'acide chlorhydrique, le rapport de la charge électrique $Q_N$ du cycle négatif à la charge électrique $Q_p$ du cycle positif, qui sont appliqués par le courant alternatif au clinquant d'aluminium, est réglé à une valeur comprise entre 0,2 et 2,0, et le rapport cyclique

$$\frac{T_p}{T_p + T_N}$$

expression dans laquelle $T_p$ est défini par la largeur de la forme d'onde positive et $T_N$ est défini par la largeur de la forme d'onde négative (temps anodique et temps cathodique du courant alternatif appliqué), est réglé à une valeur comprise entre 51 et 90%.

2. Procédé de fabrication de condensateurs électrolytiques selon la revendication 1, caractérisé en ce que la solution d'acide chlorhydrique est une solution à concentration 3—20% contenant du chlorure d'aluminium et a une température comprise entre 20 et 80°C.

3. Procédé de fabrication de condensateurs électrolytiques selon la revendication 1, caractérisé en ce que la fréquence du courant alternatif est comprise entre 5 et 100 Hz.

4. Procédé de fabrication de condensateurs électrolytiques selon la revendication 1, caractérisé en ce que le rapport $Q_N : Q_p$ de la charge électrique du cycle négatif à la charge électrique du cycle positif du courant alternatif est réglé à une valeur comprise entre 0,5 et 1,0.

5. Procédé de fabrication de condensateurs électrolytiques selon la revendication 1, caractérisé en ce que, comme solution d'attaque, on utilise une concentration de 3—20% d'une solution d'acide chlorhydrique contenant du chlorure d'aluminium, en ce que l'attaque électrolytique est exécuté à une température de 20—80°C en faisant circuler un courant alternatif d'une fréquence de 5—100Hz, en ce que le rapport $Q_N : Q_p$ de la charge électrique du cycle négatif à la charge électrique du cycle positif, qui sont appliqués par le courant alternatif au clinquant d'aluminium, est réglé à une valeur comprise entre 0,2 et 2,0, et en ce que le rapport cyclique

$$\frac{T_p}{T_p + T_N}$$

est réglé à une valeur comprise entre 51 et 90%.

6. Procédé de fabrication de condensateurs électrolytiques selon la revendication 5, caractérisé en ce que la forme d'onde du courant d'attaque est une forme d'onde, rectangulaire, trapézoïdale ou sinusoïdale.

7. Procédé de fabrication de condensateurs électrolytiques selon la revendication 1, caractérisé en ce que, comme solution d'attaque, on utilise une concentration de 3—20% d'une solution d'acide chlorhydrique contenant du chlorure d'aluminium, en ce que l'attaque électrolytique est exécutée dans cette solution à une température de 20—80-C en faisant passer un courant alternatif d'une fréquence de 5—100 Hz, en ce que le rapport $Q_N : Q_p$ de la charge électrique du cycle négatif à la charge électrique du cycle positif, qui sont appliqués par le courant alternatif au clinquant d'aluminium, est réglée à une valeur comprise entre 0,5 et 1,0, et en ce que le rapport cyclique

$$\frac{T_p}{T_p + T_N}$$

est réglé à une valeur comprise entre 51 et 90%.

FIG. IA

FIG. IB

FI G. 2

Surface enlarging factor

Negative cycle/
Positive cycle   Ratio of electric charge

FI G. 3

Surface enlarging factor

Duty ratio